Europäisches Patentamt

(19) European Patent Office

Office européen des brevets

(11) Publication number: **0 048 227**
**B1**

## (12) EUROPEAN PATENT SPECIFICATION

(45) Date of publication of patent specification: **10.12.86**

(51) Int. Cl.⁴: **C 08 J 5/18**

(21) Application number: **81850135.5**

(22) Date of filing: **17.08.81**

(54) Stretched thermoplastic material based on polyethylene and a process for its production.

(30) Priority: **04.09.80 SE 8006156**

(43) Date of publication of application:
**24.03.82 Bulletin 82/12**

(45) Publication of the grant of the patent:
**10.12.86 Bulletin 86/50**

(84) Designated Contracting States:
**AT BE CH DE FR GB IT LI LU NL**

(56) References cited:
**EP-A-0 004 847**
**EP-A-0 006 110**

(73) Proprietor: **UNIFOS KEMI AB**
**Box 44**
**S-444 01 Stenungsund (SE)**

(72) Inventor: **Ohlsson, Stefan**
**Älvhemsvägen 176**
**S-444 00 Stenungsund (SE)**

(74) Representative: **Schöld, Zaid**
**c/o KemaNobel AB Patents Box 11065**
**S-100 61 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# 0 048 227

**Description**

**Technical field**

The present invention relates to an improved stretched polyethylene material and to a process for its production. The invention relates particularly to a material of that kind which is suitable for use as thread, tapes, film and the like.

**Background of the invention**

It is well known that certain polyethylene quantities can be made considerably stiffer and get a higher strength by stretching at a temperature below the crystalline melting-point. The elasticity module is increased in the direction of the stretching force due to the fact that the molecules in the material become oriented in a more parallel arrangement than at e.g. extrusion without stretching. Materials of this kind are suitable for use where the load will be essentially in one direction and where high elongation cannot be allowed, e.g. as material for string, bands and tapes.

All polyethylene qualities are not suited to be stretched. Up till now HDPE (high density polyethylene) has predominantly been used for the mentioned purposes as this material gets a distinct increase in stiffness and strength at stretching. However, the strength of the product in the direction transverse to the stretch direction is very inferior and the product will further be so brittle that it will be split into thin fibres even at very small loads. These properties lead to a limited wear resistance and problems at mechanized use of the material. It is further almost impossible to produce a usable film from this type of polyethylene by stretching in only one direction. Another disadvantage is that tape of HDPE can generally not be made clear and transparent, but will be more or less opaque.

It is known to double-stretch the material, i.e. to stretch it in two directions, in order to improve the strength in the transverse direction. It is also known to laminate films with the stretch-directions perpendicular to each other. These methods increase the cost for the material considerably and the products will thus have a limited utility. Cold-stretching is used to overcome the limited transparency but this method gives a product having a considerably lower final strength and stiffness compared with hot-stretching.

**The invention generally**

The object of the present invention is to offer a stretched polyethylene material which does not possess the above mentioned draw-backs. The main object of the invention is to offer a material of this kind which has a considerable strength, elasticity and tenacity in the direction transverse to the stretch direction and material which has good transparency and clarity. A further object of the invention is to achieve a suitable process for the production of the material.

The above objects are achieved through the characteristic features of the appended claims.

According to the invention a polyethylene material having a comparatively low density, a comparatively high mean molecular weight, a narrow molecular weight distribution and a limited content of short aliphatic branches in the molecular structure is used. If a material of this type is stretched at least three times a product is obtained which has a strength and stiffness in the direction of the stretching force which correspond to the properties of similar products based on HDPE, but which products have considerably improved properties in the direction transverse to the stretch direction. The obtained product has low tendency to fibrillate and thus improved wear resistance. It has a sufficient elasticity and tenacity in the transverse direction to be used for films loaded in two directions and thus complies with a long desired property for materials of this kind. The product also shows the improvement relative to clarity which is aimed at.

Further objects and advantages of the invention will be evident from the following detailed description.

**Detailed description of the invention**

The material of the invention is based on polyethylene but contain minor amounts of additives and other monomers than ethylene according to what is said below.

The density of the untreated thermoplastic material should be comparatively low and is suitably within the range of from 917 to 935 kg/m$^3$, preferably within the range of from 920 to 930 kg/m$^3$. Densities can e.g. be measured according to ASTM-D 2839-69. The treated and stretched material can have a somewhat different density.

The molecular structure should be essentially linear but have a certain content of short aliphatic branches. The branch content is suitably between 3 and 50 per 1000 carbon atoms in the chain, preferbaly between 5 and 30 per 1000 carbon atoms. The branches should contain between 1 and 8 carbon atoms and preferably between 1 and 4 carbon atoms. The content of branches having more than 8 carbon atoms should be below 0.1 per 1000 carbon atoms in the chain. The greater part of the branches should in themselves be straight and not branched. The mentioned provisions can e.g. be obtained by adding to the ethylene monomer between 1 and 15, preferably between 3 and 10 per cent by weight, of olefins, particularly alpha-olefins, having 3 to 10 carbon atoms, preferably 3 to 6 carbon atoms, and by selecting the polymerization conditions in such a manner that the polymerization in the main chain will be essentially straight. It is preferred that the branches are irregularly distributed in the chain.

2

If the desired properties are to be obtained the molecular weight distribution must not be too broad. The molecular weight distribution can be established by gel chromatography and is here defined as the ratio $M_w/M_n$, where $M_n$ is the number-average molecular weight in the composition and $M_w$ is the weight-average molecular weight in the composition. This ratio should be between 1 and 10, and is suitably between 1.5 and 6, preferably between 2 and 4.

The average molecular weight, $M_w$ as above, is roughly between 50.000 and 500.000 and preferably between 90.000 and 300.000. Another measure of the degree of polymerization which can be used for the purposes of the invention is the melt index ($MI_2$, viscosity at 190°C given as grams of material which flows from a standardized testing equipment per 10 minutes) and this index should be between 0.1 and 2.0, preferably between 0.2 and 1.0, for suitable compositions according to the invention.

The crystalline melting-point for suitable materials is between about 117 and about 128°C.

Although polyethylene of a suitable density for the present purposes can be produced by radical-initiated high pressure polymerization, the thus produced polymer cannot be used as the molecular structure is too branched and the molecular weight distribution too broad. It is thus preferred that the polyethylene is produced by a low-pressure process, e.g. in gas-phase, solution or slurry, by catalytic polymerization. It is particularly suitable to use a gas-phase process of this kind for the production. As has been mentioned, the type of catalyst and the polymerization conditions should be selected to give an essentially linear polymerization and in such a manner that the desired amount of comonomer can be incorporated.

Polyethylene produced according to the so-called "Unipol"-process has successfully been used as base material for a stretched product of the invention. An embodiment of this process is described in the Swedish patent 7603163-2. The process can be carried out by polymerization of the monomers in gas-phase, in a fluid-bed of already formed granules of the polymer, at a pressure of between 5 and 25 kg/cm$^2$ and a temperature of between 75 and 125°C. A catalyst, based on titanium, magnesium and aluminium as active components, e.g. according to the European patents 4645, 4646 and 4647, is injected continuously into the bed, in amounts of between 100 and 500 ppm based on the amount of added monomer. The reaction is carried out in the presence of hydrogen gas.

It is preferred that a material having the desired properties is prepared directly through a process as described above. It is, however, also possible to mix materials from different sources and in this manner obtain a product having the desired properties. Materials prepared according to the above process but having different densities can for example be mixed. Further, a material prepared by a low-pressure gas-phase process can be mixed with a material prepared by a low-pressure solution or slurry process.

The described base material can of course be admixed with different known additives for varying specific purposes and uses.

The described base material must be converted into a suitable form before it is stretched. The material can for example be formed into threads, bars or given any other kind of profile-form. It is customary and suitable to make the material into a thin film as this after stretching can be used as such or be cut up to bands, or be twined to threads or strings. The shaping is carried out in a conventional manner by extruding a melt through a die. The film is suitably between 10 and 1000 µm thick, preferably between 50 and 500 µm. The material shall be cooled to about 80 to 90°C after extrusion. The cooling can be carried out in air, as normally at tube-production, by conveying the extrudate directly into a cooling liquid or by conveying the material past cool surfaces such as plates or rolls. Different cooling rates can be obtained by the different methods. A lower cooling-rate, such as at e.g. air cooling, gives higher crystallinity than the more rapid cooling at the other methods. The cooling rate will to a certain extent affect the properties of the final product but varying degrees of crystallinity after cooling is no hindrance to the product and process of the invention. Both the extrusion and the cooling should be carried out in such a manner that there will be essentially no tensions built into the plastic material before the stretching.

The stretching shall be carried out at a temperature below the crystalline melting-point. It is entirely possible to cold-stretch the material and this gives a product having higher elasticity but lower strength than if the stretching is carried out at an elevated temperature. To obtain the highest strength the material should thus be stretched at an elevated temperature, and preferably at a temperature as near to the crystalline melting-point as possible. A safety-margin of at least 5°C to this point should, however, be maintained. Temperatures between 40 and 120°C, and particularly between 50 and 110°C, have been found particularly advantageous for different purposes.

The material can be stretched directly if it has a suitable temperature after cooling. It is, however, preferred that the material is heated before the stretching. This should be done in such a manner that an even and stable temperature is obtained before the stretching. The heating should be adapted with respect to the stretch work supplied and the molecular re-orientation that occurs. The heating can be carried out by means of known methods, e.g. by conveying the material through a heated oven or a heated liquid bath. However, it is preferred that the heating is carried out by bringing the material into direct contact with a heated surface, e.g. a heated plate or heated rolls. If the stretching is carried out in connection with the contact between the material and the heated surface, the friction against the surface will restrict shrinkage in the width direction and the shrinkage will instead occur essentially in the thickness-direction. This gives a final orientation of the molecules favourable to the transverse strength. The product of the invention can be made fairly thick. Suitable thicknesses after stretching are between 5 and 500 μm and preferably between 100 and 400 μm.

Owing to the satisfactory properties of the material of the invention single-stretching is generally sufficient, even for use in applications wherein the demands are high, and single-stretching is thus preferred. It is however, entirely possible to stretch the base material in two directions and to make the stretched product part of a laminate.

The base material selected for the invention gives a distinct neck-in at drawing and it is easily stretched without any irregularities or tendencies to curling worth mentioning. The degree of stretching, calculated as the ratio of the cross section area before stretching to the cross section area after stretching, should exceed 3 and preferably also exceed 4. The value should be below 12 and preferably also below 10.

After the stretching a certain relaxation can be carried out, in a known manner, by restricted heating—e.g. in order to reduce the tendency to shrinking. Further, if desired, splitting and edge-trimming can be carried out during or after the production process.

The product of the invention has, as mentioned, the same satisfactory strength properties in the stretch direction as corresponding products based on HDPE. However, the new product has considerably higher strength in the transverse direction and considerably higher tenacity as well as a pronounced lower tendency to fibrillate. The clarity and transparency are also considerably better than for stretched HDPE-film.

The product of the invention is particularly suited for thread, strings, bands, tapes etc. and to form part of knitted and woven products. Owing to the excellent strength properties in two directions the product can advantageously be used as film when single-stretched, although it is of course possible to double-stretch the material or to make it form part of laminated films. The transparency increases the utility e.g. as packaging material.

Example 1

In the following comparative test stretched films of two different polyethylene qualities, A and B, were produced under similar conditions. The quality A was a high-quality commercial HDPE intended to be used for stretched films, while the quality B was a material selected according to the invention. Both samples were extruded in a conventional film-extruder to a thickness of 65 μm and cut to a width of 120 mm. The tapes were stretched to a ratio of 7:1 in a hot-air oven at a temperature of about 120—130°C. In the accompanying Table 1 the differences in material properties and the differences in test results are shown for the two tapes. From the test results it is evident that the strength properties in the stretch direction are comparable for the two samples while the clarity is considerably better for sample B than for sample A. The tendency to fibrillate was also considerably lower for sample B than for sample A.

Example 2

In the following comparative example stretched films of three different polyethylene qualities, C, D, and E, were produced under similar conditions. The quality C was a high-quality commercial HDPE intended to be used for stretched films, while the qualities D and E were materials selected according to the invention. The samples were extruded in a conventional film extruder to a thickness of 100 μm and cut to a width of 400 mm. The films were stretched mono-axially in a ratio of 6:1 on rolls heated to 120°C. The differences in material properties and the differences in the test results for the three films are shown in the accompanying Table II. It is evident from the results that the values for ultimate tensile strength in the stretch direction are comparable for all the materials, while the materials according to the invention are superior to the HDPE-material with respect to ultimate tensile strength in the transverse direction, break elongation, impact strength, softness, gloss and transparency. The secant modulus for the materials of the invention indicates for example that the monoaxially stretched material is comparable to and can replace unstretched HDPE-material as far as strength properties are concerned (the corresponding secant modulus for unstretched HDPE is about 500/500) and at the same time give a considerably improved clarity.

TABLE I

| | Sample A | Sample B |
|---|---|---|
| **Material properties** | | |
| Density kg/m³ according to ASTM-D2839-69 | 957 | 924 |
| Melt index MI according to ISO R 292 | 0.25 | 0.60 |
| Molecular weight distribution expressed as $M_w/M_n$ | 9 | 3 |
| Number of short branches per 1000 carbon atoms | 2 | 13 |
| **Test results** | | |
| Tenacity in the stretch direction cN/Tex | 34 | 38 |
| Elongation at break in % according to ISO R-1184 | 18 | 18 |
| Secant modulus N/Tex at 5% elongation | 3 | 2 |
| Linear density Tex | 950 | 900 |
| Haze in % according to ASTM-D 1003 | 60 | 20 |

TABLE II

| | Sample C | Sample D | Sample E |
|---|---|---|---|
| **Material properties** | | | |
| Density kg/m³ according to ASTM-D2839-69 | 957 | 924 | 930 |
| Melt index MI according to ISO-R-292 | 0.25 | 0.60 | 0.80 |
| Molecular weight distribution expressed as $M_w/M_n$ | 9 | 3 | 4 |
| Number of short branches per 1000 carbon atoms | 2 | 13 | 7 |
| **Test results** | | | |
| Ultimate tensile strength along/transverse to the stretch direction MPa | 180/5 | 150/30 | 140/27 |
| Elongation at break along/transverse in % according to ISO-R-292 | 20/5 | 40/800 | 50/800 |
| Impact strength dartdrop in grams according to ASTM-D-1709 | <20 | 55 | 40 |
| Secant modulus along/transverse in MPa at 3% elongation | 1600/1200 | 500/500 | 750/650 |
| Gloss according to ASTM-2457 | 110 | 150 | 155 |
| Haze in % according to ASTM-D 1003 | 8 | 5 | 5 |

**Claims**

1. Stretched plastic film material based on polyethylene having a density between 917 and 935 kg/m³, the linear chains of the molecules of the material are essentially straight but having short aliphatic branches in an average number of between 3 and 50 per 1000 carbon atoms, a degree of polymerization expressed as $MI_2$, between 0.1 and 2.0, and a molecular weight distribution, expressed as $M_w/M_n$, below 10 characterized in that the molecules are oriented, compared with the same material in unstretched condition, to a degree corresponding to at least a three times stretching of a film when made at a temperature below the crystalline melting point and between 40 and 120°C and when made so that shrinking in the width direction is restricted.

2. A material according to claim 1 and 2, characterized in that the degree of polymerization, expressed as $MI_2$, is between 0.2 and 1.0.

3. A material according to claim 1 and 2, characterized in that the density is between 920 and 930 kg/m³.

5

4. A material according to claim 1 and 2, characterized in that the content of short branches correspond to from 5 to 30 per 1000 carbon atoms.

5. A material according to claim 1 and 2, characterized in that the content of short-chained monomers is between 3 and 10 per cent.

6. A material according to claim 1 and 2, characterized in that the molecular weight distribution, $M_w/M_n$, is between 2 and 4.

7. A material according to claim 1 and 2, characterized in that molecule orientation corresponds to stretching between 4 and 10 times.

8. A process for the production of a film material according to claim 1 by stretching a thermoplastic film material based on polyethylene having a density between 917 and 935 kg/m$^3$, an essentially linear carbon-chain structure but with short aliphatic branches in a number of between 3 and 50 per 1000 carbon atoms, a degree of polymerization, expressed as MI$_2$, between 0.1 and 2.0 and a molecular weight distribution $M_w/M_n$ below 10 characterized in that the film is stretched at least 3 times, at a temperature below the crystalline melting-point and between 40 and 120°C while restricting shrinkage in the width direction.

9. A process according to claim 8, characterized in that the degree of polymerization, expressed as MI$_2$, is between 0.2 and 1.0.

10. A process according to claim 8 and 9, characterized in that the material, before or during the stretching, is brought into contact with a heated surface.

## Patentansprüche

1. Verstrecktes, plastisches Filmmaterial auf Basis von Polyethylen mit einer Dichte zwischen 917 und 935 kg/m$^3$, wobei lineare Ketten der Moleküle des Materials im wesentlichen gerade sind, jedoch kurze, aliphatische Verzweigungen in einer mittleren Zahl zwischen 3 und 50/1000 Kohlenstoffatome haben, einem Polymerisationsgrad, ausgedrückt als MI$_2$, zwischen 0,1 und 2,0 und einer Molekulargewichtsverteilung, ausgedrückt als $M_w/M_n$, unterhalb 10, dadurch gekennzeichnet, daß die Moleküle, verglichen mit dem gleichen Material in unverstrecktem Zustand, bis zu einem Grad orientiert sind entsprechend wenigstens dem dreifachen Verstrekken eines Films, wenn er bei einer Temperatur unterhalb dem kristallinen Schmelzpunkt und zwischen 40 und 120°C hergestellt und so hergestellt wurde, daß eine Schrumpfung in der Breitenrichtung beschränkt ist.

2. Material gemäß Anspruch 1, dadurch gekennzeichnet, daß der Polymerisationsgrad, ausgedrückt als MI$_2$, zwischen 0,2 und 1,0 ist.

3. Material gemäß Anspruch 1 und 2, dadurch gekennzeichnet, daß die Dichte zwischen 920 und 930 kg/m$^3$ ist.

4. Material gemäß Anspruch 1 und 2, dadurch gekennzeichnet, daß der Gehalt an kurzen Verzweigungen von 5 bis 30/1000 Kohlenstoffatome entspricht.

5. Material gemäß Anspruch 1 und 2, dadurch gekennzeichnet, daß der Gehalt an kurzkettigen Monomeren zwischen 3 und 10% beträgt.

6. Material gemäß Anspruch 1 und 2, dadurch gekennzeichnet, daß die Molekulargewichtsverteilung, $M_w/M_n$, zwischen 2 und 4 ist.

7. Material gemäß Anspruch 1 und 2, dadurch gekennzeichnet, daß die Molekülorientierung einem Verstrecken zwischen dem 4- und 10 fachen entspricht.

8. Verfahren zur Erzeugung eines Filmmaterials gemäß Anspruch 1 durch Verstrecken eines thermoplastischen Filmmaterials auf Polyethylenbasis mit einer Dichte zwischen 917 und 935 kg/m$^3$ und im wesentlichen linearer Kohlenstoffkettenstruktur, jedoch mit kurzen, aliphatischen Verzweigungen in einer Anzahl zwischen 3 und 50/1000 Kohlenstoffatome, einem Polymerisationsgrad, ausgedrückt als MI$_2$, zwischen 0,1 und 2,0 und einer Molekulargewichtsverteilung $M_w/M_n$ unterhalb 10, dadurch gekennzeichnet, daß der Film mindestens um das Dreifache verstreckt wird bei einer Temperatur unterhalb dem kristallinen Schmelzpunkt und zwischen 40 und 120°C, während die Schrumpfung in Breitenrichtung beschränkt ist.

9. Verfahren gemäß Anspruch 8, dadurch gekennzeichnet, daß der Polymerisationsgrad, ausgedrückt als MI$_2$, zwischen 0,2 und 1,0 beträgt.

10. Verfahren gemäß Anspruch 8 und 9, dadurch gekennzeichnet, daß das Material vor oder während des Verstreckens in Kontakt mit einer erhitzten Oberfläche gebracht wird.

## Revendications

1. Matériel pour film ou pellicule plastique étiré à base de polyéthylène ayant une densité comprise entre 917 et 935 kg/m$^3$ dans lequel les chaînes linéaires des molécules sont essentiellement droites, mais comportent des ramifications aliphatiques courtes dont le nombre moyen est compris entre 3 et 50 pour 1000 atomes de carbone, le taux de polymérisation, exprimé par MI$_2$, étant compris entre 0,1 et 2,0 et la distribution des poids moléculaires, exprimée par $M_w/M_n$, étant inférieure à 10 caractérisé en ce que, par comparaison avec le même matériel à l'état non étiré, les molécules sont orientées d'une manière qui correspond à au moins trois fois l'étirage d'un film lorsqu'il est effectué à une température inférieure au point de fusion des cristaux et entre 40 et 120°C et de telle manière que le retrait dans le sens de la largeur soit atténue.

2. Matériel selon la revendication 1, caractérisé en ce que le taux de polymérisation, exprimé par $MI_2$ est compris entre 0,2 et 1,0.

3. Matériel selon l'une des revendications 1 ou 2, caractérisé en ce que la densité est comprise entre 920 et 930 kg/m³.

4. Matériel selon l'une des revendications 1 ou 2, caractérisé en ce que la teneur en ramifications courtes est comprise entre 5 et 30 par 1000 atomes de carbone.

5. Matériel selon l'une des revendications 1 ou 2, caractérisé en ce que la teneur en monomères à chaînes courtes est comprise entre 3 et 10%.

6. Matériel selon l'une des revendications 1 ou 2, caractérisé en ce que la distribution des poids moléculaires, exprimée par $M_w/M_n$, est comprise entre 2 et 4.

7. Matériel selon l'une des revendications 1 ou 2, caractérisé en ce que l'orientation des molécules correspond à un étirage entre 4 et 10 fois.

8. Procédé de fabrication d'un matériel pour film ou pellicule selon la revendication 1 par étirage d'un matériel de film thermoplastique à base de polyéthylène ayant une densité comprise entre 917 et 935 kg/m³, une structure de chaîne de carbone essentiellement linéaire, mais comprenant des ramifications aliphatiques courtes dans une proportion de 3 à 50 pour 1000 atomes de carbone, un taux de polymérisation, exprimé par $MI_2$, compris entre 0,1 et 2,0 et une distribution de poids moléculaires, exprimée par $M_w/M_n$, inférieure à 10, caractérisé en ce que le film est étiré au moins trois fois à une température inférieure au point de fusion des cristaux et comprise entre 40 et 120°C, de manière à réduire le retrait dans le sens de la largeur.

9. Procédé selon la revendication 8, caractérisé en ce que le taux de polymérisation, exprimé par $MI_2$, est compris entre 0,2 et 1,0.

10. Procédé selon l'une des revendications 8 ou 9, caractérisé en ce que le matériel, avant ou pendant l'étirage, est mis en contact avec une surface chauffée.